# EUROPÄISCHE PATENTSCHRIFT

(11) **EP 0 455 592 B1**
(45) Veröffentlichungstag und Bekanntmachung des Hinweises auf die Patenterteilung: **06.07.1994**
(21) Anmeldenummer: 91810307.8
(22) Anmeldetag: 24.04.1991
(51) Int. Cl.: B27G 19/10, B23D 45/10, B27B 5/06

(54) **Sägeaggregat für vertikale Plattensäge**
Saw unit for a vertical panel saw
Unité de sciage pour une machine verticale à scier des panneaux

(30) Priorität: 02.05.1990 CH 1491/90
(43) Veröffentlichungstag der Anmeldung: 06.11.1991
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- EP-A- 0 251 090
- CH-A- 386 095
- DE-A- 2 458 330
- DE-A- 3 214 219
- FR-A- 1 601 451
- FR-A- 2 393 658
- GB-A- 2 050 939
- US-A- 4 058 150

## Beschreibung

Die vorliegende Erfindung betrifft ein Sägeaggregat gemäss dem Oberbegriff des unabhängigen Patentanspruchs.

Das Zertrennen von Werkstoffplatten, wie z.B. Holz- oder Kunststoffplatten, mittels vertikaler Plattensägen bereitet in vielen Fällen deshalb erhebliche Schwierigkeiten, weil die Schnittkanten vielfach eine Tendenz zum Ausbrechen zeigen. Auf der Austrittsseite des rotierend angetriebenen Sägeblattes lässt sich die Ausbildung unsauberer Kanten insbesondere in solchen Fällen nicht vermeiden, in welchen ein heikles Plattenmaterial, z.B. kunststoffbeschichtete Spanplatten, mittels Sägeblättern minderer Qualität zertrennt werden sollen.

Es ist daher bereits vorgeschlagen worden, Tischkreissägen mit horizontaler Werkstückführung mit einem sogenannten Vorritzer zu versehen, das heisst einem relativ kleinen, ebenfalls rotierend, jedoch gegenläufig angetriebenen Sägeblatt, das dem Hauptsägeblatt fluchtend vorauseilt und eine Sägespur gewissermassen vorfräst, deren Breite im allgemeinen diejenige des Hauptsägeblattes geringfügig übersteigt.

Während die Anbringung eines solchen Vorritzers an Tischkreissägen mit fest eingebautem Sägeaggregat aus EP-A-251 090 bekannt ist und keine besonderen Schwierigkeiten bereitet, liegen die Verhältnisse bei vertikalen Plattensägen ungleich komplizierter, so dass bisher noch kein Weg gefunden werden konnte, eine solche vertikale Plattensäge mit einem einwandfrei arbeitenden Vorritzer auszurüsten.

Die konventionelle vertikale Plattensäge, beispielsweise beschrieben in CH-A-386095, weist bekanntlich einen annähernd vertikal stehenden Stützrost auf, an dessen Frontfläche ein Sägebalken verschiebbar gelagert ist; das Sägeaggregat, im wesentlichen ein mit einem Elektromotor gekoppeltes Sägeblatt, lässt sich am Sägebalken auf- und abbewegen und ferner um 90° verschwenken, je nachdem, ob an dem Werkstück ein Vertikal- oder Horizontalschnitt auszuführen ist. Das Sägeblatt ist werkstückseitig von einer Schutzhaube umgeben, aus der es teilweise herausragt; die werkstückseitige Frontplatte dieser Schutzhaube liegt am Werkstück an und bestimmt somit das Mass, um welches das Sägeblatt in Werkstückrichtung vordringen kann.

Im Gegensatz zur Funktion des Hauptsägeblattes spielt nun beim Vorritzer die exakte Einstellung und anschliessende Konstanthaltung der Eindringtiefe des Vorritzerblattes sowie die Anpassbarkeit an unterschiedliche Werkstückdicken eine ausschlaggebende Rolle und es ist unter anderem dieser Problematik zuzuschreiben, dass der Vorritzer sich bisher bei den vertikalen Plattensägen noch nicht durchsetzen konnte, weil er zum Verklemmen neigte und sich nicht den jeweiligen Plattendicken und Toleranzen anpassen konnte.

Eine weitere Schwierigkeit, welche sich bei der vertikalen Plattensäge im Gegensatz zur Tischkreissäge findet, ist ferner darin zu sehen, dass das am Sägebalken auf- und abbewegbare Sägeaggregat auf kleinstem Raum zusammengedrängt und so angeordnet sein sollte, dass sein Schwerpunkt so nahe wie möglich am Werkstück liegt. Diese Situation wird aber durch die Anbringung eines weiteren, dem Hauptsägeblatt vorauseilenden Vorritz-Sägeblattes sowie dessen Antrieb erschwert.

Aus Gründen des Platzbedarfs und der einfachen Manipulierbarkeit des Sägeaggregates wird es auch als erheblicher Nachteil empfunden, dass es bisher nicht gelungen ist, den Vorritzerantrieb bei absoluter Konstanthaltung der Vorritztiefe vom Hauptantrieb abzuleiten.

Es ist somit die Aufgabe der vorliegenden Erfindung, die Anbringung eines Vorritzers an einer vertikalen Plattensäge vorzuschlagen, welche für das Hauptsägeblatt und den Vorritzer nur einen einzigen Antrieb erfordert, die Einhaltung einer konstanten Vorritztiefe mit Sicherheit gewährleistet und eine einwandfreie Schnittqualität selbst bei Verwendung von Sägeblättern minderer Qualität zu erzielen gestattet, wobei die erfindungsgemässe Vorrichtung auch nachträglich in unkomplizierter Weise an bestehende Plattensägen anbringbar sein soll.

Diese Aufgabe wird gelöst durch die im kennzeichnenden Teil des unabhängigen Patentanspruchs 1 definierte Merkmalskombination. Bevorzugte Ausführungsbeispiele ergeben sich aus den abhängigen Patentansprüchen.

Nachstehend wird anhand der beiliegenden Zeichnung ein Ausführungsbeispiel des Erfindungsgegenstandes beschrieben.
Fig. 1 ist eine Seitenansicht eines mit Vorritzer ausgestatteten Sägeaggregates,
Fig. 2 ist eine Schnittdarstellung dieses Sägeaggregates und
Fig. 3 veranschaulicht die Schnittabmessungen an einem Werkstück.

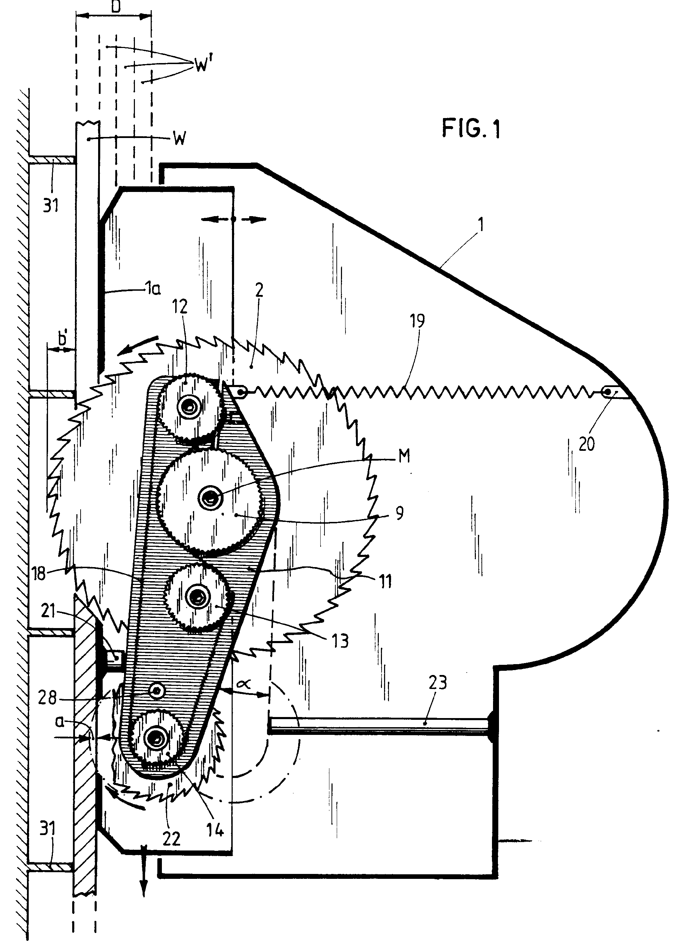

Fig. 1 zeigt das Gehäuse 1 eines am Sägebalken einer vertikalen Plattensäge verschiebbar angeordneten Sägeaggregates, dessen bei M angedeuteter Elektromotor ein Hauptsägeblatt 2 antreibt. Die Abtriebswelle 3 des Motors M trägt einen drehstarr mit derselben verbundenen Klemmring 4; zwischen diesem und einer drehbar an einem Kugellager 5 gelagerten Hülse 6 ist das Hauptsägeblatt 2 eingeklemmt. In Verlängerung der Abtriebswelle ragt in die Bohrung der Hülse 6 ein Zapfen 7, der mit dem in die gleiche Bohrung hineinragenden Zapfen 8 eines Antriebsritzels 9 durch eine zentrale Schraube 10 verbunden ist. Das Antriebsritzel 9 dreht sich daher mit der gleichen Umdrehungszahl wie das Hauptsägeblatt 2.

Innerhalb des am Sägeaggregat befestigten Gehäuses 1 befindet sich eine Schutzhaube 1a, die gegenüber dem Gehäuse 1 verschiebbar angeordnet ist. Die Schutzhaube 1a hat die Aufgabe als Berührungsschutz zu dienen und das Verbreiten von Sägemehl und Staub zu verhindern. Deshalb muss die Schutzhaube stets mit leichtem Druck auf das Werkstück drücken, um auch das Flattern der Werkstücke beim Sägen zu verhindern. Dieser Druck wird mit Zugfeder 19 über den Support 11 und Anschlag 21 erzeugt.

Am Aussenring des Kugellagers 5 ist ein Support 11 befestigt, an welchem zwei Umlenkritzel 12 und 13 sowie ein Vorritzer-Antriebsritzel 14 mittels Kugellagern 15, 16, 17a, 17b frei drehbar gelagert sind. Ueber das Antriebsritzel 9 und die übrigen, am Support 11 angeordneten Drehritzel 12, 13 und 14 ist ein endloses Mitnahmeorgan 18 geführt. Letzeres kann eine Kette oder ein Keilriemen sein und ist beispielsweise als Zahnriemen ausgebildet, wobei die Ritzel 9 und 12 bis 14 eine entsprechende Zahnung aufzuweisen haben.

Gemäss Fig. 1 greift am Oberteil des Supports 11 eine Zugfeder 19 an, die an der Stelle 20 am Gehäuse 2 verankert ist und die danach trachtet, den Support 11 um die Achse des Kugellagers 5 im Uhrzeigersinn zu verdrehen, bis die werkstückseitige Vorderkante des Supports 11 gegen einen an der Innenseite der Gehäuse-Frontplatte 1a angeordneten Anschlag 21 auftrifft. Dadurch ist die Eindringtiefe des mit dem Antriebsritzel 14 drehstarr gekoppelten Vorritzer-Sägeblattes 22 festgelegt.

Der Ausschlag des Supports 11 nach der dem Anschlag 21 gegenüberliegenden Seite wird durch einen am Gehäuse befestigten Stift 23 begrenzt, so dass der Support 11 höchstens um den Winkel alpha verschwenkt werden kann.

Auf den Aussenringen der beiden Kugellager 17a und 17b ist eine Justierhülse 24 angeordnet, deren Aussengewinde mit einem in der entsprechenden Supportbohrung angeordneten Innengewinde kämmt. Die Justierhülse 24 weist ferner einen radial nach aussen ragenden Bund 25 auf, in dessen Zahnung ein Ritzel 26 eingreift, das seinerseits mit einem drehbaren Justierstift 27 fest verbunden ist. Durch Drehen des Justierstifts 27 an dessen Innensechskant 28 (Fig. 1) lässt sich somit die Hülse 24 axial verschieben. Damit verschiebt sich aber auch die Nabe 22a des Vorritz-Sägeblattes 22, wobei das letztere in exakt fluchtende Anordnung bezüglich des Hauptsägeblattes 2 gebracht werden kann. Die Nabe 22a ist am Wellenstummel des Antriebsritzels 14 angeschraubt. Durch eine Sicherungsschraube 30 lässt sich die Hülse 24 nach erfolgter Justierung arretieren.

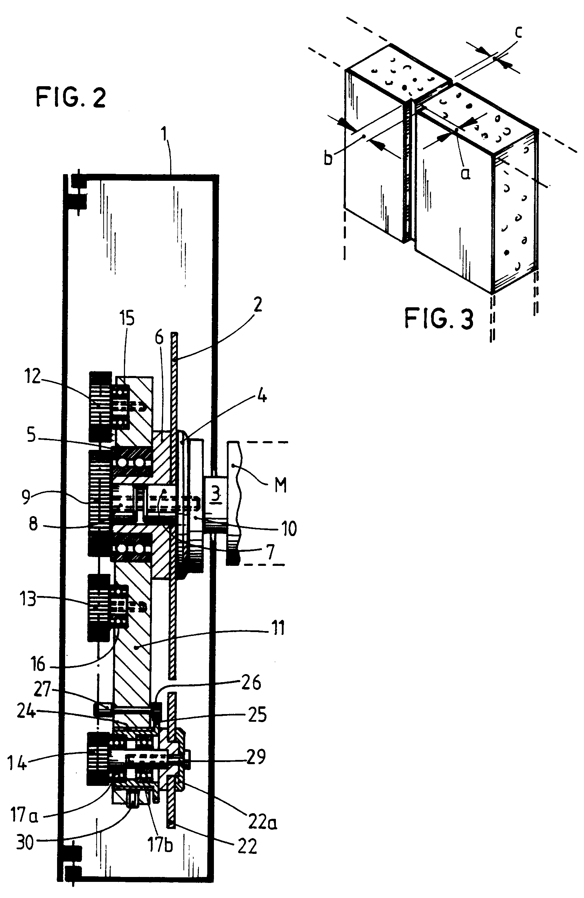

Wie Fig. 3 anhand eines Werkstückes zeigt, bewirkt das Vorritz-Sägeblatt, das beispielsweise als Doppelblatt mit variabler Schnittbreite oder einteilig mit nach aussen konisch zulaufenden Zähnen ausbildbar ist, eine Schnittbreite b, welche vorzugsweise beidseitig minimal über die Schnittbreite des Hauptsägeblattes hinausragt. Das Mass a bezeichnet die Eindringtiefe des Vorritz-Sägeblattes, d.h. das jenige Mass, um welches das Vorritz-Sägeblatt aus der Frontplatte 1a des Gehäuses 1 herausragen muss.

Dank der beschriebenen Anordnung ist einerseits gewährleistet, dass das Hauptsägeblatt 11 eine konstante Ueberschnittiefe b′ aufweist, während sich die Relativlage der Schutzhaube 1a bezüglich dem Gehäuse 1 je nach Plattendicke anpasst und die Eindringtiefe a des Vorritzers 22 stets gleich bleibt. Die Werkstückplatten unterschiedlicher Dicke, in Fig. 1 mit W′ bezeichnet, die sich auf die Stützleisten 31 abstützen, können somit bis zur Maximaldicke D bearbeitet werden.

## Patentansprüche

1. Sägeaggregat für vertikale Plattensäge mit einem elektromotorisch angetriebenen Hauptsägeblatt (2), das durch die Frontplatte (1a) eines dasselbe umgebenden Schutzhauben-Gehäuses (1) hindurchragt, dadurch gekennzeichnet, dass die Antriebswelle (3) des Hauptsägeblattes (2) über eine Drehsinnumkehr-bewirkende Uebertragungsglieder (9, 12, 13, 14, 18) mit einem Vorritz-Sägeblatt (22) verbunden ist, das einschliesslich der Uebertragungsglieder an einem schwenkbar gelagerten Support (11) angeordnet ist, der durch ein elastisches Vorspannorgan (19) so gegen einen Anschlag (21) gehalten wird, dass das Vorritz-Sägeblatt (22) in jeder Schneidposition um ein konstantes Mass (a) aus der genannten Frontplatte herausragt, wobei die Frontplatte (1a) gegenüber dem am Sägeaggregat befestigten Gehäuse (1) verschiebbar gelagert ist, so dass die Relativlage zwischen Frontplatte (1a) und festem Gehäuse (1) je nach Dicke der zu schneidenden Werkstückplatte (W) bei konstanter Eindringtiefe (a) des Vorritz-Sägeblattes (22) variiert.

2. Sägeaggregat nach Anspruch 1, dadurch gekennzeichnet, dass der Oberteil des Supports (11) an der Antriebswelle (3) des Hauptsägeblattes (2) schwenkbar gelagert und das am unteren Ende des Supports (11) angeordnete Vorritz-Sägeblatt (22) über einen Zahnriemen (18) angetrieben ist.

3. Sägeaggregat nach einem der Ansprüche 1 oder 2, dadurch gekennzeichnet, dass am Oberteil des Supports (11) eine Zugfeder (19) angreift, um das untere Supportende in Kontakt mit dem an der inneren Frontplattenfläche befindlichen Anschlag (21) zu halten.

4. Sägeaggregat nach Anspruch 3, dadurch gekennzeichnet, dass die Länge des genannten Anschlags (21) im Hinblick auf die Anpassung der Vorritztiefe, beispielsweise nach dem Schleifen des Vorritz-Sägeblattes, variierbar ist und sich immer der Werkstückdicke anpassen muss.

5. Sägeaggregat nach Anspruch 4, dadurch gekennzeichnet, dass der Anschlag (21) in Form einer Justierschraube ausgebildet ist.

6. Sägeaggregat nach einem der Ansprüche 1 bis 5, dadurch gekennzeichnet, dass das Vorritz-Sägeblatt (22) in axialer Richtung verschiebbar gelagert ist und damit bezüglich des Hauptsägeblattes (2) fluchtend justiert werden kann.

7. Sägeaggregat nach Anspruch 6, dadurch gekennzeichnet, dass die Nabe (22a) des Vorritz-Sägeblattes (22) mit einer Justierhülse (24) in Wirkungsverbindung steht, deren Aussengewinde mit einem in einer Supportbohrung angeordneten Innengewinde kämmt, derart, dass die Hülse bei ihrer Drehung die Nabe (22a) axial verschiebt.

8. Sägeaggregat nach Anspruch 7, dadurch gekennzeichnet, dass die Justierhülse (24) einen gezahnten, radialen Bund (25) aufweist, an welchem die Justierhülse mittels eines Justierstiftes (27) verdreht werden kann.

9. Vertikale Plattensäge, dadurch gekennzeichnet, dass sie mit einem gemäss Anspruch 1 ausgebildeten Sägeaggregat versehen ist.

## Claims

1. A saw unit for a vertical panel saw, having an electromotively driven main saw blade (2) which projects through the front plate (1a) of a guard-hood housing (1) surrounding the said main saw blade (2), characterized in that the drive shaft (3) of the main saw blade (2) is connected, via transmission members (9, 12, 13, 14, 18) causing a reversal in the direction of rotation, to a pre-slitting saw blade (22) which, including the transmission members, is arranged on a pivotably mounted support (11) held against a stop (21) by an elastic prestressing member (19), in such a way that, in every cutting position, the pre-slitting saw blade (22) projects from the said front plate by a constant amount (a), the front plate (1a) being mounted displaceably relative to the housing (1) fastened to the saw unit, so that the relative position between the front plate (1a) and fixed housing (1) varies, depending on the thickness of the workpiece panel (W) to be cut, for a constant depth of penetration (a) of the pre-slitting saw blade (22).

2. A saw unit according to claim 1, characterized in that the top part of the support (11) is mounted pivotably on the drive shaft (3) of the main saw blade (2), and the pre-slitting saw blade (22) arranged at the lower end of the support (11) is driven via a toothed belt (18).

3. A saw unit according to either of claims 1 or 2, characterized in that a tension spring (19) engages on the top part of the support (11), in order to keep the lower end of the support in contact with the stop (21) located on the inner face of the front plate.

4. A saw unit according to claim 3, characterized in that the length of the said stop (21) is variable with a view to the adaptation of the pre-slitting depth, for example after the grinding of the pre-slitting saw blade, and must always adapt to the workpiece thickness.

5. Saw unit according to Claim 4, characterized in that the stop (21) is designed in the form of an adjusting screw.

6. A saw unit according to any of claims 1 to 5, characterized in that the pre-slitting saw blade (22) is mounted displaceably in the axial direction and can therefore be adjusted in alignment with the main saw blade (2).

7. A saw unit according to claim 6, characterized in that the hub (22a) of the pre-slitting saw blade (22) is connected operatively to an adjusting sleeve (24), the external thread of which meshes with an internal thread arranged in a support bore, in such a way that the sleeve, during its rotation, displaces the hub (22a) axially.

8. A saw unit according to claim 7, characterized in that the adjusting sleeve (24) has a toothed radial collar (25), on which the adjusting sleeve can be rotated by means of an adjusting pin (27).

9. Vertical panel saw, characterized in that it is provided with a saw unit designed according to Claim 1.

## Revendications

1. Groupe de sciage pour machine verticale à scier des panneaux, comportant une lame de scie principale (2) qui est entraînée par un moteur électrique et qui traverse la platine frontale (1a) d'un boîtier de protection (1) entourant celle-ci, caractérisé en ce que l'arbre d'entraînement (3) de la lame de scie principale (2) est raccordée via des éléments de transmission (9, 12, 13, 14, 18) effectuant un changement de sens de rotation à une lame de scie de prédécoupe (22), qui est agencée, y compris les éléments de transmission, sur un support (11) monté à pivotement, qui est maintenu par un organe de pré-tension élastique (19) contre une butée (21) de sorte que la lame de scie de prédécoupe (22) dépasse, dans chaque position de découpe, de ladite platine frontale d'une quantité constante (a), la platine frontale (1a) étant montée de manière à pouvoir se déplacer vis-à-vis du boîtier (1) fixé au groupe de sciage, de telle sorte que la position relative entre la platine frontale (1a) et le boîtier fixe (1) varie en fonction de l'épaisseur du panneau (w) à découper pour une profondeur de pénétration constante (a) de la lame de scie de prédécoupe (22).

2. Groupe de sciage selon la revendication 1, caractérisé en ce que la partie supérieure du support (11) est montée à pivotement sur l'arbre d'entraînement (3) de la lame de scie principale (2) et la lame de scie de prédécoupe (22) agencée à l'extrémité inférieure du support (11) est entraînée via une courroie dentée (18).

3. Groupe de sciage selon l'une des revendications 1 ou 2, caractérisé en ce qu' un ressort de traction (19) agit à la partie supérieure du support (11) pour maintenir l'extrémité inférieure du support en contact avec la butée (21) qui se trouve sur la surface interne de la platine frontale.

4. Groupe de sciage selon la revendication 3, caractérisé en ce que la longueur de ladite butée (21) est variable pour s'adapter à la profondeur de prédécoupe, par exemple, selon l'affûtage de la lame de scie de prédécoupe, et doit toujours s'adapter à l'épaisseur de la pièce.

5. Groupe de sciage selon la revendication 4, caractérisé en ce que la butée (21) se présente sous la forme d'une vis d'ajustage.

6. Groupe de sciage selon l'une quelconque des revendications 1 à 5, caractérisé en ce que la lame de scie de prédécoupe (22) est montée de manière à pouvoir se déplacer dans la direction axiale et peut donc être ajustée dans l'alignement avec la lame de scie principale.

7. Groupe de sciage selon la revendication 6, caractérisé en ce que le moyeu (22a) de la lame de scie de prédécoupe (22) coopère avec une douille d'ajustage (24) dont le filet externe s'engrène sur un filet interne formé dans un alésage du support en sorte que la douille déplace axialement le moyeu (22a) lors de sa rotation.

8. Groupe de sciage selon la revendication 7, caractérisé en ce que la douille d'ajustage (24) présente une collerette radiale dentée (25), sur laquelle la douille d'ajustage peut être soumise à rotation à l'aide d'une broche d'ajustage (27).

9. Machine verticale à scier les panneaux, caractérisée en ce qu'elle est pourvue d'un groupe de sciage selon la revendication 1.
